# EUROPÄISCHE PATENTSCHRIFT

(11) **EP 1 216 513 B1**
(45) Veröffentlichungstag und Bekanntmachung des Hinweises auf die Patenterteilung: **09.04.2008**
(21) Anmeldenummer: 00975798.0
(22) Anmeldetag: 27.09.2000
(51) Int. Cl.: H04B 1/62

(54) **VERFAHREN UND EMPFANGSANORDNUNG ZUR ERHÖHUNG DER ÜBERTRAGUNGSREICHWEITE BEI EINER ÜBERTRAGUNG VON SIGNALEN IM BASISBAND**
METHOD AND RECEIVING DEVICE FOR INCREASING THE TRANSMISSION RANGE IN BASEBAND TRANSMISSION OF SIGNALS
PROCEDE ET DISPOSITIF DE RECEPTION POUR AUGMENTER LA PORTEE DE TRANSMISSION LORS DE TRANSMISSIONS DE SIGNAUX EN BANDE DE BASE

(30) Priorität: 30.09.1999 DE 19947094
(43) Veröffentlichungstag der Anmeldung: 26.06.2002
(73) Patentinhaber: Nokia Siemens Networks GmbH & Co. KG, 81541 München (DE)
(72) Erfinder: GOTHE, Holger, 83607 Holzkirchen (DE); GIECK, Reiner, 82110 Germering (DE)
(86) Internationale Anmeldenummer: PCT/DE2000/003359
(87) Internationale Veröffentlichungsnummer: WO 2001/024391

(56) Entgegenhaltungen:
- US-A- 4 136 267
- US-A- 4 745 622

## Beschreibung

In Zubringernetzen von Kommunikationsnetzen werden zu übermittelnde Informationen - insbesondere Daten oder digitalisierte Sprachsignale - mit Hilfe von Signalen im Basisband über die Leitungen - beispielsweie 2-Draht- der 4-Draht-Anschlußleitungen - übertragen.

Um die Übertragungsreichweite der zu übertragenden Signale bzw. Daten zu erhöhen, werden die Basisbandsignale einer Entzerrereinrichtung zugeführt, mit deren Hilfe sowohl eine Vorals auch eine Nachschwingerentzerrung durchgeführt wird. Hierbei ist eine aufwendige Vor- und Nachschwingerentzerrung vorgesehen, die durch komplexe Entzerrereinrichtungen realisierbar ist. Des weiteren sind bei der Übertragung von Basisbandsignalen über größere Distanzen die Signale sehr stark verzerrt. Wegen der Mehrdeutigkeit der empfangenen Basisbandsignale sind zusätzliche Maßnahmen zur Synchronisierung in den Entzerrereinrichtungen erforderlich.

Um die Entzerrung der Basisbandsignale durch eine Übertragung über eine Kupferleitung zu vermeiden, können die Basisbandsignale vorverzerrt, d.h. mit einer Preemphasis über die Leitung bzw. Kupferleitung gesendet werden. Hierbei konnte bei einer Einschaltung der Preemphasis der Basisbandsignale auf einen Entzerrer in der Empfangseinrichtung verzichtet werden. Für eine Verwendung einer Preemphasis bzw. einer Vorverzerrung der Basisbandsignale muß jedoch die Länge der Kupferleitung bzw. der Leitung bekannt sein. Davon abhängig wird die Preemphasis vorab entweder eingeschaltet oder auch nicht.

Die der Erfindung zugrundeliegende Aufgabe besteht darin, die Übertragungsreichweite bei einer Übertragung von Signalen im Basisband zu erhöhen. Die Aufgabe wird durch die Merkmale des Patentanspruchs 1 gelöst.

Der wesentliche Aspekt des erfindungsgemäßen Verfahrens ist darin zu sehen, daß der Pegel des empfangenen Signals im Basisband gemessen und in Abhängigkeit von dem Meßergebnis die Vorverzerrung des zu sendenden Signals eingestellt wird. Vorteilhaft wird der Pegel des empfangenen Signals vom Verstärkungswert eines Leistungs-Regelverstärkers abgeleitet - Anspruch 2. Ein derartiger Regelverstärker ist meist in Empfangseinrichtungen für den Empfang von Basisbandsignalen vorhanden und kann vorteilhaft zusätzlich für das erfindungsgemäße Verfahren benutzt werden.

Die Vorverzerrung des Signals im Basisband wird vorteilhaft durch eine frequenzabhängige Pegelbeeinflussung und/oder eine frequenzabhängige Phasenbeeinflussung des Signals bewirkt, wobei der Pegel des Signals bei höheren Frequenzen erhöht und die Phase des Signals bei höheren Frequenzen voreingestellt wird - siehe Anspruch 3. Der Pegel und die Phase des zu sendenden Signals wird hierbei in Abhängigkeit von dem eingesetzten Basisbandverfahren und/oder der Art der Leitungen eingestellt - Anspruch 4. Dies bedeutet, daß je nach Basisbandverfahren, z.B. das AMI-Basisbandverfahen, in Abhängigkeit von dem gemessenen Pegel des empfangenen Signals der Pegel und die Phase des zu sendenden Signals voreingestellt bzw. vorverzerrt wird.

Aus der US-A 4,136,267 ist ein Übertragungssystem bekannt, bei dem in ein Unterseekabel mehrere fernsteüerbare Verstärker eingefügt sind. Mit Hilfe eines von einem Ende des Unterseekabels übertragenen Steuersignals können die Komponenten des Verstärkers ferngesteuert eingestellt werden. Eine Einstellung einer Vorverzerrung beziehungsweise eines Vorverzerrers ist hierbei nicht vorgesehen.

Aus der US-A 4,745,622 ist ein Entzerrer für ein digitales Übertragungssystem bekannt, bei dem ein Vor- und Nachentzerrer in der Kommunikation zwischen Knoten in einem pulsamplitudenmodulierten digitalen oder analogen Kommunikationssytem eingesetzt wird. Der Vorverzerrer wird mit Hilfe eines Schalters in den Signalweg eines parallelen Kabels ein- oder ausgeschaltet. Der Schalter wird mit Hilfe einer Schaltschwelle gesteuert, die vom Signalverlust des pulsamplitudenmodulierten Signals abhängig ist.

Weitere vorteilhafte Ausgestaltungen des erfindungsgemäßen Verfahrens sowie eine Empfangsanordnung zur Durchführung des erfindungsgemäßen Verfahrens sind den weiteren Ansprüchen zu entnehmen.

Im folgenden wird das erfindungsgemäße Verfahren bzw. die erfindungsgemäße Empfangsanordnung anhand einer Zeichnung näher erläutert.

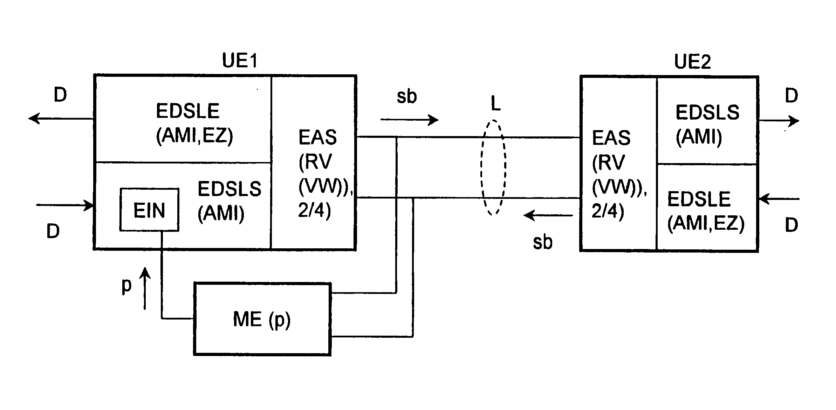

Die Zeichnung zeigt in einem Blockschaltbild eine zweidrähtige Leitung L - insbesondere eine Kupferleitung -, an die an einem Ende eine erste Übertragungseinrichtung UE1 und an dem weiteren Ende eine zweite Übertragungseinrichtung UE2 angeschlossen ist. Sowohl die erste als auch die zweite Übertragungseinheit UE1, UE2 sind durch eine Eingangs-AusgangsSchaltung EAS, durch eine Empfangseinheit EDSLE und durch eine Sendeeinheit EDSLS gebildet. Für das Ausführungsbeispiel sei angenommen, daß durch die Sende- und Empfangseinheiten EDSLS, EDSLE ein Basisband-Übertragungsverfahren realisiert ist. Ein vorteilhaftes Basisband-Übertragungsverfahren stellt beispielsweise das bipolare AMI-Übertragungsverfahren (Alternate Mark Inversion) dar. Das erfindungsgemäße Verfahren ist jedoch auch für andere Basisband-Übertragungsverfahren wie beispielsweise dem HDBₙ-Übertragungsverfahren oder dem Coded-Diphase-Verfahren anwendbar.

Mit Hilfe eines Basisband-Übertragungsverfahrens werden zu sendende Daten D über die zweidrähtige Leitung L übertragen. Bei den Basisband-Übertragungsverfahren wird von einer binären Übertragung ausgegangen, die bei einigen Codierungsverfahren zu einem dreiwertigen Sendesignal führt.

Aufgrund der Länge der Leitung L und der in die Leitung L eingefügten übertragungstechnischen Einrichtungen kommt es zu Pegeldämpfungen und Laufzeitverzerrungen eines im Basisband übertragenen Signals sb. Erfindungsgemäß wird der Pegel p eines ausgesandten Signals sb in der jeweils empfangenden Übertragungseinheit UE1, UE2 gemessen. In der Zeichnung ist beispielhaft für beide Übertragungseinheiten UE1, UE2 bei der ersten Übertragungseinheit UE1 eine Meßeinheit ME zur Messung des empfangenen Signals sb im Basisband dargestellt, wobei die Meßeinheit ME mit der Leitung L und einer in der Sendeeinheit EDSLS der ersten Übertragungseinheit UE1 angeordneten Einstelleinheit EIN verbunden ist. In dieser Einstelleinheit EIN wird in Abhängigkeit von dem von der Meßeinheit ME übermittelten Wert des Pegels p eine Vorverzerrung des auszusendenden Signals sb im Basisband automatisch durchgeführt bzw. eingestellt. Hierbei wird in Abhängigkeit von dem verwendeten Basisband-Übertragungsverfahren der Pegel bei höheren Frequenzen angehoben; zusätzlich kann bei höheren Frequenzen die Phase des Signals sb voreingestellt, d.h. vorverschoben werden - Hochpaßverhalten zur Kompensation des Tiefpaßverhaltens der Leitung. Nach einer Übertragung des Signals sb über die Leitung L kann in der jeweiligen Empfangseinheit EDSLE auf eine Entzerrung des übermittelten Signals sb gänzlich verzichtet werden oder ein Entzerrer EZ nachgeschaltet werden - in der Zeichnung durch die Bezeichnung EZ angedeutet -, der sehr einfach ausgestaltet werden kann. Hierbei kann insbesondere auf eine Entzerrung der Vorschwinger weitgehend verzichtet werden.

In der Eingangs-Ausgangsschaltung EAS wird eine zwei/vier-Draht-Umsetzung 2/4 und umgekehrt durchgeführt, wobei die elektrischen Eigenschaften der Leitung L an die internen elektrischen Eigenschaften der Übertragungseinheit UE1 angepaßt werden. Zusätzlich kann ein Regelverstärker RV in die Eingangs-Ausgangsschaltung EAS integriert sein, mit deren Hilfe das empfangene Signal sb auf einen vorgegebenen Pegel verstärkt und an den Empfänger EDSLE weitergeleitet wird. Der sich hierbei ergebende Verstärkungswert VW repräsentiert die Höhe des Pegels p des empfangenen Signals sb. In diesem Falle ist die Meßeinheit ME im Regelverstärker RV integriert, d.h. sowieso vorhanden und kann als separate Einrichtung entfallen. Hierbei wird der Verstärkungswert VW an die Einstelleinheit EIN übermittelt und in dieser in Abhängigkeit von dem übermittelten Verstärkungswert VW eine Vorentzerrung des auszusendenden Signals sb durchgeführt - in der Zeichnung durch in Klammer gesetzte Bezeichnung VW angedeutet.

Das erfindungsgemäße Verfahren bzw. die erfindungsgemäße Anordnung kann sowohl in der ersten als oder in der zweiten Übertragungseinheit UE1, UE2 oder auch in beiden realisiert werden, wobei ein nicht erfindungsgemäß vorverzerrtes, empfangenes Signal sb mit Hilfe eines zusätzlichen, aufwendigeren Entzerrers EZ zu entzerren ist.

Das erfindungsgemäße Verfahren ist nicht auf das Ausführungsbeispiel beschränkt, sondern kann auch bei einer Datenübertragung über eine Vierdraht-Leitung, bei der in jeder Übertragungsrichtung eine eine gleiche Streckenführung vorliegt, und bei weiteren, nicht detailliert beschriebenen Basisband-Übertragungsverfahren eingesetzt werden, bei denen eine Vorverzerrung eines auszusendenden Signals sb möglich ist.

## Patentansprüche

1. Verfahren zur Erhöhung der Übertragungsreichweite bei einer Übertragung von Signalen (sb) im Basisband über Leitungen (L), bei dem jeweils der Pegel (p) des empfangenen Signals (sb) gemessen und in Abhängigkeit von dem Messergebnis (p) die Vorverzerrung des zu sendenden Signals (sb) eingestellt wird, wobei die Vorverzerrung des zu sendenden Signals (sb) im Basisband durch eine frequenzabhängige Pegelbeeinflussung und/oder eine frequenzabhängige Phasenbeeinflussung des zu sendenden Signals (sb) in Abhängigkeit von dessen Frequenz bewirkt wird.

2. Verfahren nach Anspruch1, **dadurch gekennzeichnet, dass** der Pegel (p) des empfangenen Signals (sb) vom Verstärkungswert (VW) eines empfangsseitigen Leitungs-Regelverstärkers (RV) abgeleitet wird.

3. Verfahren nach Anspruch 1 oder 2, **dadurch gekennzeichnet, dass** der Pegel (p) des zu sendenden Signals (sb) bei höheren Frequenzen des zu sendenden Signals (sb) erhöht und die Phase des zu sendenden Signals (sb) bei höheren Frequenzen des zu sendenden Signals (sb) voreingestellt wird.

4. Verfahren nach Anspruch 3, **dadurch gekennzeichnet dass** der Pegel und die Phase des zu sendenden Signals (sb) in Abhängigkeit von dem eingesetzten Basisbandverfahren (AMI) und/oder der Art der Leitungen (L) eingestellt wird.

5. Verfahren nach Anspruch 3 oder 4,**dadurch gekennzeichnet, dass** die Stärke der Vorverzerrung invers zur Höhe des gemessenen Pegels (p) eingestellt wird.

6. Verfahren nach einem der vorhergehenden Ansprüche, **dadurch gekennzeichnet, dass** das empfangene Signal (sb) zusätzlich entzerrt wird.

7. Verfahren nach einem der vorhergehenden Ansprüche, **dadurch gekennzeichnet, dass** die Leitung (L) als 2-Draht-oder 4-Draht-Kupferleitung ausgestaltet ist.

8. Empfangsanordnung (UE1) zur Erhöhung der Übertragungsreichweite bei einer Übertragung von Signalen (sb) im Basisband (AMI) über Leitungen (L), **dadurch gekennzeichnet, dass** eine Messeinheit (ME) zum Messen des Pegels (p) des empfangenen Signals (sb) und eine Einstelleinheit (EIN) zum Einstellen der Vorverzerrung des zu sendenden Signals (sb) in Abhängigkeit von dessen Frequenz und in Abhängigkeit von dem von der Messeinheit (ME) übermittelten Messergebnis (p) vorhanden ist.

9. Empfangsanordnung nach Anspruch 8, **dadurch gekennzeichnet, dass** die Messeinheit (ME) in einem Leitungs-Regelverstärker (RV) zum Verstärken des empfangenen Signals (sb) realisiert ist, wobei aus dem Verstärkungswert (VW) der Messwert des Pegels (p) des Signals (sb) abgeleitet wird, und dass die Einstelleinheit (EIN) Mittel zum Einstellen des Pegels und der Phasenlage des auszusendenden Signals(sb) in Abhängigkeit von dessen Frequenz aufweist.

## Claims

1. Method for increasing the transmission range for signal (sb) transmission in baseband via lines (L), in each of which the level (p) of the received signal (sb) is measured and the preemphasis of the signal (sb) to be transmitted is set as a function of the measurement result (p), with the preemphasis of the signal (sb) to be transmitted in baseband being produced by influencing the level as a function of the frequency and/or by influencing the phase as a function of the frequency of the signal (sb) to be transmitted, as a function of its frequency.

2. Method according to Claim 1, **characterised in that** the level (p) of the received signal (sb) is derived from the gain (VW) of a line control amplifier (RV) at the receiving end.

3. Method according to Claim 1 or 2, **characterised in that** the level (p) of the signal (sb) to be transmitted is increased when the signal (sb) to be transmitted is at relatively high frequencies, and the phase of the signal (sb) to be transmitted is preset when the signal (sb) to be transmitted is at relatively high frequencies.

4. Method according to Claim 3, **characterised in that** the level and the phase of the signal (sb) to be transmitted are set as a function of the baseband method (AMI) being used and/or the nature of the lines (L).

5. Method according to Claim 3 or 4, **characterised in that** the strength of the preemphasis is set in inverse proportion to the magnitude of the measured level (p).

6. Method according to one of the preceding claims, **characterised in that** the received signal (sb) is additionally equalised.

7. Method according to one of the preceding claims, **characterised in that** the line (L) is in the form of a 2-wire or 4-wire copper line.

8. Receiving arrangement (UE1) for increasing the transmission range when transmitting signals (sb) in baseband (AMI) via lines (L), **characterised in that** a measurement unit (ME) is provided in order to measure the level (p) of the received signal (sb), and a setting unit (EIN) is provided in order to set the preemphasis of the signal (sb) to be transmitted as a function of its frequency and as a function of the measurement result (p) transmitted from the measurement unit (ME).

9. Receiving arrangement according to Claim 8, **characterised in that** the measurement unit (ME) is provided in a line control amplifier (RV) for amplification of the received signal (sb), with the measured value of the level (p) of the signal (sb) being derived from the gain (VW), and **in that** the setting unit (EIN) has means for setting the level and the phase angle of the signal (sb) to be transmitted, as a function of its frequency.

## Revendications

1. Procédé pour augmenter la portée de transmission dans le cas d'une transmission de signaux (sb) dans la bande de base sur des lignes (L), dans lequel le niveau (p) du signal reçu (sb) est mesuré à chaque fois et la prédistorsion du signal à émettre (sb) est réglée en fonction du résultat de la mesure (p), la prédistorsion du signal à émettre (sb) étant provoquée, dans la bande de base, par une influence du niveau en fonction de la fréquence et/ou une influence de la phase en fonction de la fréquence, exercées sur le signal à émettre (sb), en fonction de la fréquence de celui-ci.

2. Procédé selon la revendication 1, **caractérisé en ce que** le niveau (p) du signal reçu (sb) est dérivé de la valeur d'amplification (VW) d'un amplificateur de réglage de ligne (RV) côté récepteur.

3. Procédé selon la revendication 1 ou 2, **caractérisé en ce que** le niveau (p) du signal à émettre (sb) subit une augmentation dans le cas de fréquences plus élevées du signal à émettre (sb) et la phase du signal à émettre (sb) subit un préréglage dans le cas de fréquences plus élevées du signal à émettre (sb).

4. Procédé selon la revendication 3, **caractérisé en ce que** le niveau et la phase du signal à émettre (sb) subissent un réglage en fonction du procédé de transmission en bande de base (AMI) mis en oeuvre et/ou du type des lignes (L).

5. Procédé selon la revendication 3 ou 4, **caractérisé en ce que** l'intensité de la prédistorsion est réglée inversement à la hauteur du niveau (p) mesuré.

6. Procédé selon l'une des revendications précédentes, **caractérisé en ce que** le signal (sb) reçu est additionnellement corrigé.

7. Procédé selon l'une des revendications précédentes, **caractérisé en ce que** la ligne (L) se présente sous la forme d'une ligne de cuivre à 2 fils ou à 4 fils.

8. Dispositif de réception (UE1) pour augmenter la portée de transmission dans le cas d'une transmission de signaux (sb) dans la bande de base (AMI) sur des lignes (L), **caractérisé par** la présence d'une unité de mesure (ME) pour mesurer le niveau (p) du signal reçu (sb) et d'une unité de réglage (EIN) pour régler la prédistorsion du signal à émettre (sb) en fonction de fréquence de celui-ci et en fonction du résultat de mesure (p) transmis par l'unité de mesure (ME).

9. Dispositif de réception selon la revendication 8, **caractérisé en ce que** l'unité de mesure (ME) est réalisée dans un amplificateur de réglage de ligne (RV) pour amplifier le signal (sb) reçu, la valeur mesurée du niveau (p) du signal (sb) étant dérivée de la valeur d'amplification (VW), et **en ce que** l'unité de réglage (EIN) comporte des moyens pour régler le niveau et la relation de phase du signal à émettre (sb) en fonction de la fréquence de celui-ci.
